# EUROPÄISCHE PATENTSCHRIFT

(11) **EP 1 037 760 B1**
(45) Veröffentlichungstag und Bekanntmachung des Hinweises auf die Patenterteilung: **02.04.2003**
(21) Anmeldenummer: 98958911.4
(22) Anmeldetag: 20.11.1998
(51) Int. Cl.: G05D 1/02, B60K 31/00

(54) **VERFAHREN ZUR REGELUNG VON GESCHWINDIGKEIT UND ABSTAND BEI ÜBERHOLVORGÄNGEN**
METHOD FOR REGULATING SPEED AND DISTANCE DURING PASSING MANEUVERS
PROCEDE POUR LA REGULATION DE LA VITESSE ET DE LA DISTANCE LORS DE DEPASSEMENTS

(30) Priorität: 15.12.1997 DE 19755609; 12.05.1998 DE 19821122
(43) Veröffentlichungstag der Anmeldung: 27.09.2000
(73) Patentinhaber: Volkswagen Aktiengesellschaft, 38436 Wolfsburg (DE)
(72) Erfinder: BÄKER, Wolfgang, D-38114 Braunschweig (DE); RUCHATZ, Thomas, D-38165 Lehre (DE); ANDREAS, Peter, D-38518 Gifhorn (DE)
(86) Internationale Anmeldenummer: EP9807492
(87) Internationale Veröffentlichungsnummer: WO99030919

(56) Entgegenhaltungen:
- DE-A- 3 637 165
- DE-A- 4 200 694
- DE-A- 4 209 060
- DE-A- 19 514 023
- US-A- 5 278 764

## Beschreibung

Die Erfindung bezieht sich auf ein Verfahren zur Regelung von Geschwindigkeit und/oder Abstand eines ersten Fahrzeuges zu mindestens einem vorausfahrenden Fahrzeug im Zusammenhang mit einem Überholvorgang gemäß Oberbegriff des Anspruches 1.

Eine für die Sicherheit der Fahrzeuginsassen besonders relevante Fahrsituation ist das Einleiten von Überholmanövem, da bei derartigen Überholmanövern die Aufmerksamkeit des Fahrers gleichzeitig auf verschiedene Bereiche seiner Fahrumgebung gerichtet werden muß. So ist zum ersten zu beurteilen, ob die Fahrsituation auf der Überholspur bzw. Gegenfahrbahn ein Überholmanöver überhaupt zuläßt, d. h. also ein Überholmanöver durch von hinten oder entgegenkommende Fahrzeuge nicht von vome herein unmöglich gemacht wird. Erkennt der Fahrer, daß die Überholspur bzw. Gegenfahrbahn grundsätzlich ein Überholmanöver zulassen würde, so muß er weiterhin auf eventuell schon überholende und von hinten kommende Fahrzeuge achten, während er gleichzeitig das Fahrverhalten der vor ihm fahrenden Fahrzeuge, insbesondere auch des direkt vor ihm fahrenden Fahrzeuges im Auge behalten muß. Nach dem Entschluß für einen Überholvorgang müssen diese verschiedenen Beobachtungen ständig weiter ablaufen, während der Fahrer durch das Setzen des Blinkers sowie das Beschleunigen die Voraussetzungen schaffen muß, um auf die Überholspur überwechseln zu können und den Überholvorgang einzuleiten. Hierbei ist von besonderer Bedeutung, daß der Fahrer das Fahrverhalten des direkt vor ihm herfahrenden Fahrzeuges sowie sein eigenes Beschleunigungsverhalten ständig überprüft, so daß es nicht durch zu dichtes Auffahren und/oder Geschwindigkeitsänderungen des direkt vorausfahrenden Fahrzeuges zu gefährlichen Situationen kommen kann.

Aufgrund der Vielzahl der gleichzeitig vorzunehmenden Beobachtungen sowie der daraus abzuleitenden Handlungen ist der Überholvorgang an sich eine besonders risikoreiche Fahrsituation. Daher wurden schon Anstrengungen unternommen, diese besonders risikoreiche Fahrsituation durch den Fahrer entlastende oder ihm assistierende Systeme ungefährlicher ausgestalten zu können. Beispielsweise ist aus der DE 42 00 694 A1 ein Verfahren zur Geschwindigkeits- und Abstandsregelung eines Fahrzeuges bekannt, bei dem der aktuelle Abstand sowie die momentane Geschwindigkeit eines Fahrzeuges erfaßt und daraus die Sollwerte für Abstand und Geschwindigkeit dieses Fahrzeuges ermittelt und eingestellt werden kann. Das System geht dabei von dem Grundgedanken aus, daß ein Eingriff des Fahrers, der sich aus besonderen Gegebenheiten der Fahrsituation ergeben kann, unbedingten Vorrang gegenüber der automatisch ablaufenden Geschwindigkeit bzw. Abstandsregelung haben muß. Daher wird bei dem bekannten Verfahren die Abstandsregelung nach einem Eingriff des Fahrers zeitlich begrenzt ausgesetzt. Hierdurch soll eine flexible Reaktion des Systems auf verschiedene Fahrsituationen gewährleistet sein, wobei als Auslöser für derartige Unterbrechungen das Setzen eines Blinkers und/oder das Betätigen des Gaspedales herangezogen werden kann. Das vorgestellte Verfahren erlaubt zwar den unmittelbaren Eingriff des Fahrers in eine ablaufende Regelungssituation, doch wird insbesondere in dem kritischen Zeitbereich eines Überholvorganges, nämlich bei der Annäherung bei gleichzeitiger Beschleunigung des Fahrzeuges an das direkt vorausfahrende Fahrzeug durch das Abschalten der Abstandsregelung und/oder der Geschwindigkeitsregelung eine Sicherheitslücke geschaffen, in der gerade eine Unterstützung des Fahrers von besonderer Bedeutung ist. Betätigt beispielsweise der Fahrer bei der Annäherung an ein direkt vorausfahrendes Fahrzeug den Blinker, so wird bei üblichen Überholvorgängen die Beschleunigung und das Ausscheren des Fahrzeuges auf die Überholspur in sehr kurzem zeitlichen Abstand von dem Betätigen des Blinkers vorgenommen werden. Dieses Ausscheren bei dem gleichzeitig üblichen Beschleunigen zum Erreichen der Fließgeschwindigkeit einer Überholspur, beispielsweise einer Autobahn führt aber zu einer unter Umständen sehr starken Annäherung des Fahrzeuges an das vorausfahrende Fahrzeug, für das Ablaufen einer Abstandsregelung einen besonders großen Sicherheitsspielraum ergeben würde. Genau innerhalb dieses Zeitraumes wird das vorgestellte System jedoch völlig deaktiviert und erst beispielsweise nach zwei oder drei Sekunden wieder in Betrieb genommen.

In der deutschen Offenlegungsschrift DE 42 09 060 A1 ist ein Verfahren zur Regelung des Abstandes zwischen fahrenden Fahrzeugen beschrieben, das unabhängig von der Art der Abstandserfassung anwendbar ist. Dabei werden die in Verlauf einer aktuell aufrechterhaltenen Abstandsregelung erfolgenden Fahrereingriffe erfaßt und bewertet.

Im Zuge des normalen Fahrbetriebes werden betätigte Steuermittel, wie etwa das Gaspedal, das Bremspedal, die Blinker etc. überwacht. Aus einer Bewertung festgestellter Betätigungen wird aus dem aktuellen Fahrerwunsch geschlossen und dementsprechend die in den aktuell errechneten Sollabstand eingehende Reaktionszeit des Fahrers adaptiv korrigiert.

Die deutsche Offenlegungsschrift DE 36 37 165 A1 offenbart ein Verfahren und eine Einrichtung zum Verhindern von Zusammenstößen, insbesondere für Kraftfahrzeuge im Straßenverkehr. Dabei wird vorgeschlagen, mit Hilfe von geeigneten Sensorsystemen Situations-, Fahrzeug- und Umweltparameter zu erfassen, die Parameter in einer Auswerteeinheit zu bewerten und daß je nach ermitteltem Gefährlichkeitsgrad der Situation Alarmstufen ausgelöst sowie geeignete Gegenmaßnahmen veranlaßt werden.

Ein Verfahren und eine Vorrichtung zur Geschwindigkeit- und Abstandsregelung für ein Kraftfahrzeug wird in der deutschen Offenlegungsschrift DE 195 14 023 A1 dargestellt. Dabei wird die Geschwindigkeit eines Kraftfahrzeuges geregelt, solange sich kein vorausschauendes Fahrzeug innerhalb eines vorgegebenen Erfassungsbereiches vor dem Kraftfahrzeug befindet. Der Abstand zum vorausfahrenden Fahrzeug wird dann geregelt, wenn sich ein solches im Erfassungsbereich befindet. Weiterhin wird der Fahrzeugführer während eines Überholvorganges unterstützt, indem der linke Blinker überwacht wird und bei Setzen des Blinkers der Sollabstand für die Abstandsregelung auf einem geringeren Sollabstand festgelegt wird.

Aufgabe der vorliegenden Erfindung ist es daher, ein Verfahren zur Regelung der Geschwindigkeit und/oder des Abstandes eines ersten Fahrzeuges zu mindestens einem vorausfahrenden Fahrzeug im Zusammenhang mit einem Überholvorgang bereitzustellen, bei dem der Fahrer insbesondere beim Überholvorgang unterstützt wird und dadurch der Überholvorgang sicherer ablaufen kann, ohne daß der Fahrer in seiner freien Entscheidung zur Vornahme eines Überholvorganges eingeschränkt wird, und bei dem gleichzeitig der Ablauf des Überholvorganges durch eine Unterstützung des Fahrers sicherer gemacht wird.

Die Lösung der erfindungsgemäßen Aufgabe ergibt sich in Zusammenwirken mit den Merkmalen des Oberbegriffes aus den kennzeichnenden Merkmalen des Anspruches 1. Die Unteransprüche beschreiben bevorzugte Weiterbildungen des erfindungsgemäßen Verfahrens.

Das erfindungsgemäße Verfahren geht von dem Grundgedanken aus, daß nach Betätigung der in Fahrtrichtung auf der Fahrerseite des Fahrzeuges angeordneten Fahrtrichtungsanzeige durch den Fahrer des ersten Fahrzeuges selbst und zur Vorbereitung des Überholvorganges der Abstand zu dem direkt vorausfahrenden Fahrzeug höchstens solange verringert wird, bis sich ein minimal zulässiger Abstand zu dem direkt vorausfahrenden Fahrzeug einstellt.

Hierbei prüft die Auswerteeinrichtung mindestens bei Erreichen des minimal zulässigen Abstandes, ob in der vorliegenden Fahrsituation eine Kollision mit dem vorausfahrendem Fahrzeug eintreten kann. Bei Feststellen einer Kollisionsgefahr des ersten Fahrzeuges mit dem direkt vorausfahrenden Fahrzeug wird der eingeleitete Überholvorgang abgebrochen und das erste Fahrzeug auf einen vorgebbaren Sicherheitsabstand zurückgebracht.

Durch das erfindungsgemäße Verfahren wird insbesondere der kritische Bereich der Annäherung des ersten Fahrzeuges an das direkt vorausfahrende Fahrzeug ständig daraufhin überwacht, ob ein im System festgelegter oder situationsabhängiger minimaler Abstand nicht unterschritten wird. Hierbei wird als Auslöser für eine derartige Überprüfung das Betätigen der Fahrtrichtungsanzeige an der Fahrerseite gewählt, das üblicherweise einem Überholvorgang vorausgehen muß. Wie auch bei einem nichtassistierten Überholvorgang kann nach Betätigen der Fahrtrichtungsanzeige an der Fahrerseite der Abstand zu dem direkt vorausfahrenden Fahrzeug solange verringert werden, bis sich der minimal zulässige Abstand einstellt. Mindestens bei Erreichen dieses minimal zulässigen Abstandes prüft die Auswerteeinrichtung aufgrund z.B. der erfaßten Abstandswerte des vorausfahrenden Fahrzeuges sowie der fahrphysikalischen Größen des ersten Fahrzeuges, ob bei einer weiteren Verringerung des Abstandes zwischen dem ersten Fahrzeug und dem vorausfahrenden Fahrzeug eine Kollision mit dem vorausfahrenden Fahrzeug eintreten kann. Dies ist beispielsweise dann der Fall, wenn durch nicht oder nicht ausreichend vorgenommene Lenkbewegungen des Fahrers das erste Fahrzeug unter Berücksichtigung entsprechender Toleranzwerte das vorausfahrende Fahrzeug berühren würde.

Wird eine derartige Kollisionsgefahr mit dem direkt vorausfahrenden Fahrzeug erkannt, so wird der eingeleitete Überholvorgang abgebrochen und das erste Fahrzeug auf einen vorgebbaren Sicherheitsabstand zurückgeführt. Hiermit wird beispielsweise verhindert, daß aufgrund mangelnder Aufmerksamkeit des Fahrers und/oder unterbliebener Lenkbewegungen des ersten Fahrzeuges Auffahrunfälle stattfinden können, wie sie sich aufgrund einer unzulässig großen Annäherung zu dem direkt vorausfahrenden Fahrzeug ergeben.

Ebenfalls werden Fahrsituationen berücksichtigt, die beispielsweise durch Bremsoperationen des direkt vorausfahrenden Fahrzeuges entstehen und die zu einer unzulässigen Verringerung des Abstandes zu diesem Fahrzeug führen. Ist beispielsweise in einer derartigen Fahrsituation die Aufmerksamkeit des Fahrers des ersten Fahrzeuges noch vollständig mit der Beobachtung des Verkehrs auf der Überholspur vor dem Überholvorgang beschäftigt, so kann er eine derartige Bremsoperation des vorausfahrenden Fahrzeuges leicht übersehen und dadurch trotz ursprünglich richtiger Verhaltensweise ein Auffahrunfall ausgelöst werden.

In einer besonders bevorzugten Weiterbildung stellt die Auswerteeinrichtung eine Kollisionsgefahr dann fest, wenn das direkt vorausfahrende Fahrzeug in der vorliegenden Fahrsituation nach Ablauf einer definierten Zeit noch von der Erfassungseinrichtung erfaßt wird. Üblicherweise wird nach einem schon ganz oder auch nur teilweise vorgenommenen Ausscheren des ersten Fahrzeuges auf die Überholspur bzw. die Gegenfahrbahn die Erfassungseinrichtung, die üblicherweise im wesentlichen einen kegelförmigen Erfassungsbereich in Fahrtrichtung des ersten Fahrzeuges abdeckt, das direkt vorausfahrende Fahrzeug nicht mehr in diesem unmittelbaren Erfassungsbereich erfassen. Ein derartiger Verlust des Erfassungssignales bzw. eine starke Veränderung des von dem vorausfahrenden Fahrzeuges erfaßten Signales kann nun dahingehend verstanden werden, daß die Lenkbewegungen bzw. die vorhandene Fahrsituation ausreichend ist, so daß das erste Fahrzeug um das direkt vorausfahrende Fahrzeug herumfahren kann, ohne das es zu einer Kollision kommt.

In einer anderen vorteilhaften Weiterbildung kann die Auswerteeinrichtung eine Kollisionsgefahr dann feststellen, wenn in der vorliegenden Fahrsituation die Lenkbewegungen des Fahrers für ein Vermeiden der Kollision des ersten Fahrzeuges mit dem direkt vorausfahrenden Fahrzeug nicht ausreichen. Beispielsweise kann aufgrund von Daten, die die Erfassungseinrichtung von dem direkt vorausfahrenden Fahrzeug ermittelt, aufgrund von vorliegenden Geschwindigkeiten bzw.

Geschwindigkeitsdifferenzen sowie der Lenkbewegungen auch ohne vollständigen Verlust des Signals des direkt vorausfahrenden Fahrzeuges ermittelt werden, ob sich eine Kollision sicher vermeiden läßt. Wird jedoch von der Auswerteeinrichtung auch nur die Möglichkeit einer Kollision festgestellt, so sollte aus Sicherheitsgründen der eingeleitete Überholvorgang abgebrochen und das erste Fahrzeug auf den vorgebbaren Sicherheitsabstand zurückgebracht werden.

In einer bevorzugten Weise wird der Überholvorgang des ersten Fahrzeuges dadurch abgebrochen, daß eine Beschleunigung des ersten Fahrzeuges verringert und/oder das erste Fahrzeug abgebremst wird. Beispielsweise kann es abhängig von dem Maß der Verringerung des Abstandes zu dem direkt vorausfahrenden Fahrzeug erforderlich sein, neben der Zurücknahme des Gaspedals und der daraufhin eintretenden Motorbremse zusätzliche Bremsoperationen durchzuführen, um eine Kollision mit dem direkt vorausfahrenden Fahrzeug, das sich nunmehr wieder in direkter Fahrtrichtung des ersten Fahrzeuges weiterbewegt, zu verhindern.

Hierbei kann in besonders vorteilhafter Weise das Verringem der Beschleunigung und/oder das Bremsen des ersten Fahrzeuges bei Erkennen einer Kollisionsgefahr bis zum Wiedererreichen des vorgegebenen Sicherheitsabstandes automatisch erfolgen. Durch eine derartige automatische Wieder-Vergrößerung des Abstandes zu dem direkt vorausfahrenden Fahrzeug wird der Fahrer des ersten Fahrzeuges in dieser kritischen Fahrsituation deutlich entlastet, so daß er seine Aufmerksamkeit auf notwendige Lenkbewegung und/oder die Beobachtung der anderen Verkehrsteilnehmer richten kann.

Weiterhin kann bei Abbruch des Überholvorganges die Fahrtrichtungsanzeige auch automatisch zurückgesetzt werden, um den anderen Verkehrsteilnehmern den Abbruch des Überholvorganges unmißverständlich zu signalisieren. Insbesondere bei nur geringen Lenkbewegungen erfolgt bei heute üblichen Fahrtrichtungsanzeigern nicht immer zuverlässig ein automatisches Zurücksetzen der Fahrtrichtungsanzeige, so daß auch nach Abbruch des Überholvorganges beispielsweise die Fahrtrichtungsanzeige weiterhin betätigt wird. Dies kann zu Irritationen des nachfolgenden Verkehrs und daraus resultierenden schwierigen Verkehrssituationen führen.

Besonders vorteilhaft ist es, wenn das erste Fahrzeug bis zum Erreichen des Minimalabstandes zu dem direkt vorausfahrenden Fahrzeug auf eine derartige Geschwindigkeit beschleunigt wird, daß es sich im wesentlichen der Fließgeschwindigkeit des Verkehrs auf der Überholspur anpaßt. Diese ist beispielsweise für das Überholverhalten auf Autobahnen oder auf in Fahrtrichtung mehrspurigen Straßen von besonderer Bedeutung, da ansonsten die große Geschwindigkeitsdifferenz zwischen dem gerade ausgescherten überholendem Fahrzeug und dem Fließverkehr auf der Überholspur groß ist und ggf. Abbremsmanöver der auf der Überholspur fahrenden Fahrzeuge erfordert. Hierzu wird üblicherweise schon recht früh durch Beschleunigen des ersten Fahrzeuges auch schon bei einem größeren Abstand zu dem direkt vorausfahrenden Fahrzeug eine Geschwindigkeit erreicht, die im wesentlich der Fließgeschwindigkeit auf der Überholspur entspricht. Gerade bei einer derartigen, schon erhöhten Geschwindigkeit ist die Beachtung des Abstandes zu dem direkt vorausfahrenden Fahrzeug von besonderer Bedeutung, da aufgrund der höheren Geschwindigkeiten die Reaktionszeiten auf unvorhergesehene Fahrsituationen besonders gering sein müssen.

Besonders vorteilhaft ist es, wenn diese Beschleunigung des ersten Fahrzeuges nach dem Setzen der Fahrtrichtungsanzeige durch den Fahrer längstens bis zum Erreichen des Minimalabstandes automatisch erfolgt. Hierdurch wird der Fahrer hinsichtlich des Beschleunigens wiederum von einer seiner Aufmerksamkeit beanspruchenden und damit die Beachtung der Verkehrssituation beeinträchtigenden Tätigkeit entlastet, wobei insbesondere die ständige Überprüfung des Abstandes zu dem direkt vorausfahrenden Fahrzeug gewährleistet ist. Beispielsweise kann durch Vorgabe von typischen Überholgeschwindigkeiten, beispielsweise Tempo 130 auf Autobahnen od. dgl. weiterhin abgeschätzt werden, ob der vorliegende Abstand zu dem direkt vorausfahrenden Fahrzeug für die Erreichung einer derartigen Geschwindigkeit überhaupt ausreichend ist oder ein vorzeitiges Wechseln auf die Überholspur erforderlich wird.

Von besonderem Vorteil ist es, daß das erste Fahrzeug durch Lenkbewegungen des Fahrers auf die Überholspur ausschert und zumindest mit der erreichten Überholgeschwindigkeit an dem bislang vorausfahrenden Fahrzeug vorbeigelenkt wird. Hierdurch wird dem Fahrer die Souveränität hinsichtlich der Gestaltung des Überholvorganges nicht genommen, sondem durch das erfindungsgemäße Verfahren lediglich sichergestellt, daß voraussehbare, kritische Fahrsituationen sicher vermieden werden.

Von besonderem Vorteil ist es, wenn nach erfolgtem Überholvorgang durch Betätigen der rechten Fahrtrichtungsanzeige und/oder Vorliegen einer Lenkbewegung zurück auf die ursprüngliche Fahrspur die Abstandsregelung, vorzugsweise automatisch wieder aufgenommen und die Fahrspur auf ein neues vorausfahrendes Fahrzeug untersucht wird. Hierdurch wird insbesondere bei dichter Verkehrsfolge und einem Einscheren zwischen zwei relativ nah hintereinander her fahrenden Fahrzeugen gewährleistet, daß sofort bei dem Einscheren eine Überprüfung der Fahrsituation auf den erforderlichen Abstand, mindestens jedoch den gesetzlichen Mindestabstand, erfolgt.

In einer anderen Weiterbildung wird beim Wiedereinscheren nach erfolgtem Überholvorgang die Betätigung der Fahrtrichtungsanzeige an der Beifahrerseite für die Geschwindigkeit und/oder Abstandsregelung nicht berücksichtigt. Eine derartige Vorgehensweise kann dann vorteilhaft sein, wenn eine weiche Anpassung der Fahrgeschwindigkeit des ersten Fahrzeuges nach dem Überholvorgang an die auf der der Fahrerseite abgewandten Fahrspur gefahrenen Geschwindigkeit vorgenommen werden soll, ohne das es durch sofortige Erfassung von auf der von der Fahrerseite abgewandten Fahrspur nunmehr direkt vorausfahrenden Fahrzeuge zu starken negativen Beschleunigungen kommen soll. Hierbei bleibt die Verantwortung des Fahrers für die Einstellung eines neuen Abstandes zu den nunmehr direkt vorausfahrenden Fahrzeug erhalten.

In einer anderen Weiterbildung wird die Abstandsregelung nach erfolgtem Überholvorgang dann wieder aufgenommen, wenn die Erfassungseinrichtung wieder ein neues vorausfahrendes Fahrzeug erfaßt Beispielsweise ist bei großen Lücken zwischen auf einer der Fahrerseite abgewandten Fahrspur fahrenden Fahrzeugen die sofortige Aufnahme der Abstandsregelung nach dem Wiedereinscheren nicht von besonderer Bedeutung, da bis zum Aufschließen zu dem nunmehr direkt vorausfahrenden Fahrzeug ein ausreichender zeitlicher Abstand gegeben sein kann.

Von besonderer Bedeutung ist es, daß der Zustand der Fahrtrichtungsanzeige an der Fahrerseite beim Einleiten des Überholvorganges erst ab Erreichen oder Überschreiten eines Geschwindigkeitsschwellwertes berücksichtigt wird. Der Grund hierfür ist, daß insbesondere bei relativ geringen Geschwindigkeiten im Stadtverkehr oder im einfachen außerörtlichen Verkehr die ständig auftretenden Abbiegevorgänge oder sonstigen Fahrtrichtungswechsel nicht als Einleitung von Überholvorgängen gedeutet werden sollen, die die Geschwindigkeits- bzw. Abstandsregelung nach dem erfindungsgemäßen Verfahren in Gang setzen. Hierzu wird in einer vorteilhaften Weiterbildung vorgeschlagen, daß als Geschwindigkeitsschwellwert eine Geschwindigkeit von etwa 70 bis 80 Stundenkilometern vorgegeben wird. Oberhalb derartiger Geschwindigkeiten liegt üblicherweise kein Abbiegen oder ein Fahrtrichtungswechsel vor, sondern es wird beispielsweise im außerstädtischen Verkehr überholt. Bei Vorliegen einer unterhalb des Geschwindigkeitsschwellwertes vorgenommenen Betätigung der rechten und/oder der linken Fahrtrichtungsanzeige wird in vorteilhafter Weise die Geschwindigkeit und/oder der Abstand nicht geregelt, da in derartigen Situationen der Fahrer die volle Souveränität über das Führen des Fahrzeuges behalten soll.

In einer anderen Weiterbildung können bei Betätigung der rechten und/oder der linken Fahrtrichtungsanzeige unterhalb des Geschwindigkeitsschwellwertes eine Geschwindigkeitsregelung und/oder eine Abstandsregelung mit von einem Überholvorgang unterschiedlicher Regelungscharakteristitk vorgenommen werden. Beispielsweise könnte dies dafür genutzt werden, um Ausfahroperationen aus einer Autobahn oder Abfahrten von Schnellstraßen od. dgl. mit einer entsprechenden Regelungscharakteristik zur Unterstützung des Fahrers zu vereinfachen.

Eine besonders vorteilhafte Ausbildung des erfindungsgemäßen Verfahrens und der erfindungsgemäßen Vorrichtung zur automatischen Notbremsung zeigt die Zeichnung.

Es zeigen:
- Figur 1 Fah-: zeigt eine Fahrsituation im Umfeld eines Überholvorganges, bei dem ein rer eines ersten Fahrzeuges einen Überholvorgang einleiten kann,
- Figur 2 vom: zeigt eine Fahrsituation, bei der ein Fahrer eines ersten Fahrzeuges einen Überholvorgang eingeleitet hat, bei dem der minimal zulässige Abstand direkt vorausfahrenden Fahrzeug unterschritten wird,
- Figur 3 aus-: zeigt eine Fahrsituation, bei der ein Fahrer eines ersten Fahrzeuges bei reichendem Abstand von einem direkt vorausfahrenden Fahrzeug einen Überholvorgang eingeleitet hat,
- Figur 4: zeigt eine Fahrsituation beim Wiedereinscheren eines ersten Fahrzeuges nach dem Überholvorgang.

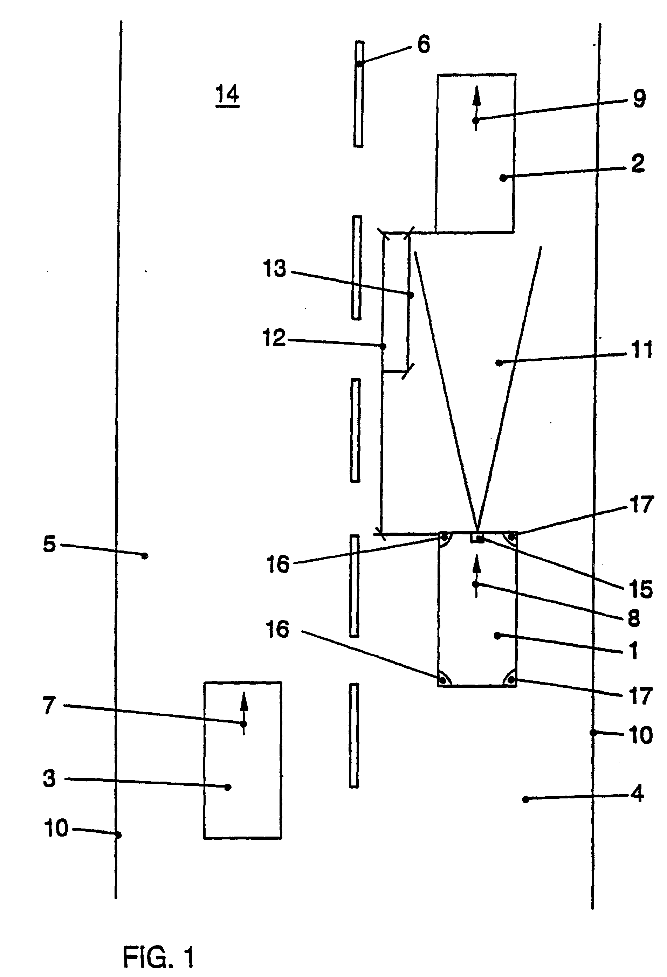

In der Figur 1 ist eine Fahrsituation dargestellt, wie sie im Umfeld eines Überholvorganges üblicherweise vorliegt, bei der ein erstes Fahrzeug 1, das auf der rechten Fahrspur 4 einer durch die Fahrbahnberandungen 10 begrenzten Straße 14 in einem Abstand 12 von einem direkt vorausfahrenden Fahrzeug 2 fährt. Das Fahrzeug 1 fährt mit der Geschwindigkeit, die durch den Pfeil 8 angedeutet ist. Das vor dem Fahrzeug 1 direkt vorausfahrende Fahrzeug 2 fährt mit einer Geschwindigkeit entsprechend dem Pfeil 9. Auf der durch die Markierung des Mittelstreifens 6 getrennten Überholspur 5 befindet sich ein drittes Fahrzeug 3, welches mit einer Geschwindigkeit 7 in die gleiche Fahrtrichtung wie die Fahrzeuge 1 und 2 fährt. Dieses Fahrzeug 3 fährt beispielsweise mit einer auf der Überholspur 5 einer Autobahn üblichen Fließgeschwindigkeit.

Die in der Figur 1 dargestellte Fahrsituation, die hinsichtlich der Abstände der Fahrzeuge 1, 2 und 3 nur prinzipienhaft angedeutet ist, erlaubt es dem Fahrer des Fahrzeuges 1, einen Überholvorgang vorzubereiten, bei dem er durch Wechseln auf die Überholspur 5 vor dem Fahrzeug 3 das Fahrzeug 2 überholt und vor diesem Fahrzeug 2 wieder einschert. Hierzu muß bei der allein durch den Fahrer vorzunehmenden konventionellen Überholoperation der Fahrer des Fahrzeuges 1 sowohl die Geschwindigkeit 7 des Fahrzeuges 3 als auch die Geschwindigkeit 9 des Fahrzeuges 2, darüber hinaus den Abstand 12 zu dem Fahrzeug 2 und die Geschwindigkeit 8 seines eigenen Fahrzeuges 1 richtig einschätzen und miteinander hinsichtlich der Möglichkeit eines Überholmanövers korrellieren. Aufgrund dieser vielflältigen Einflüsse, die beispielsweise beim Überholen auf einer in Fahrtrichtung nur einspurigen Straße noch mit der Beobachtung des möglicherweise entgegenkommenden Verkehrs verbunden ist, führt häufig dazu, daß der Fahrer des Fahrzeuges 1 eine der Einflußgrößen, beispielsweise den Abstand 12 zu dem direkt vorausfahrenden Fahrzeug 2 oder auch die Geschwindigkeit 7 des Fahrzeuges 3 falsch einschätzt und es im Rahmen des Überholmanövers, das er aufgrund seiner falschen Schätzung eingeleitet hat, zu einer Kollision mit dem Fahrzeug 3 bzw. 2 kommen kann.

Das erfindungsgemäße Verfahren unterstützt während dieser Überholoperation den Fahrer des Fahrzeuges 1 dadurch, daß es unter Verwendung von Signalen einer nicht weiter dargestellten Erfassungseinrichtung 15 sowie von ebenfalls nicht weiter dargestellten Vorrichtungen zur Erfassung von dem Fahrzustand des Fahrzeuges 1 entsprechenden physikalischen Größen bzw. Einstellungen eine Entscheidung hinsichtlich der Möglichkeit eines Überholvorganges und deren Ausführung trifft.

Hierzu wird bei dem Verfahren mit der nicht weiter dargestellten Erfassungseinrichtung 15 ein Bereich vor dem ersten Fahrzeug 1und in Fahrtrichtung des ersten Fahrzeuges 1 erfaßt, der dem beispielsweise kegelförmig dargestellten Erfassungsbereich 11 entspricht. Innerhalb dieses Erfassungsbereiches 11 befindliche Fahrzeuge, beispielsweise das direkt vorausfahrende Fahrzeug 2, liefern somit der Erfassungseinrichtung 15 ein Signal z.B. über den Abstand 12 zwischen dem ersten Fahrzeug 1 und dem Heckbereich des direkt vorausfahrenden Fahrzeuges 2, das an eine ebenfalls nicht weiter dargestellte Auswerteeinrichtung in dem ersten Fahrzeug 1 weitergeleitet wird. Diese Auswerteeinrichtung prüft nun beispielsweise in der in der Figur 1 dargestellten Fahrsituation, ob aufgrund der eigenen Fahrgeschwindigkeit 8 des ersten Fahrzeuges 1 sowie der aus Abstandsänderungen des Abstandes 12 ermittelbaren Relativgeschwindigkeit des Fahrzeuges 2 und der daraus berechenbaren absoluten Geschwindigkeit 9 des Fahrzeuges 2 sowie der Lenkstellung des Fahrzeuges 1 eine Fahrbewegung des ersten Fahrzeuges 1 möglich ist, um mit dem ersten Fahrzeug 1 auf die Überholspur 5 der Straße 14 überzuwechseln, ohne daß es zu einer Kollision mit dem direkt vorausfahrenden Fahrzeug 2 kommt. Bei größeren Abständen, wie sie beispielsweise in der Figur 1 zwischen dem ersten Fahrzeug 1 und dem direkt vorausfahrenden Fahrzeug 2 vorhanden sind, ist ein Überholmanöver grundsätzlich denkbar. Hierzu wird bei dem erfindungsgemäßen Verfahren der Abstand 12 zwischen dem ersten Fahrzeug 1 und dem direkt vorausfahrenden Fahrzeug 2 beispielsweise durch Beschleunigen des ersten Fahrzeuges 1 derart reduziert und dabei die Geschwindigkeit des ersten Fahrzeuges 1 so erhöht, daß ein Überwechseln des ersten Fahrzeuges 1 auf die Überholspur 5 der Straße 14 möglich wird, ohne beispielsweise den auf der Überholspur 5 befindlichen Verkehr in Form des dritten Fahrzeuges 3 zu stören.

Zur Auslösung einer derartigen Kontrolle wird, wie bei üblichen Überholvorgängen auch, der Fahrer des ersten Fahrzeuges 1 den linken Fahrtrichtungsanzeiger 16 betätigen, um den nachfolgenden Verkehr, also beispielsweise dem Fahrer des Fahrzeuges 3 seine Überholabsicht kund zu tun. Ausgelöst durch diese Betätigung des linken Fahrtrichtungsanzeigers 16 des Fahrzeuges 1 wird bei dem vorgeschlagenen Verfahren der Abstand 12 zwischen dem ersten Fahrzeug 1 und dem direkt vorausfahrenden Fahrzeug 2 z.B. kontinuierlich daraufhin untersucht, ob ein minimaler Abstand 13, der kleiner ist als der tatsächlich vorhandene Abstand 12, unterschritten wird. Ist dieser minimale Abstand 13 noch nicht erreicht, so bedeutet dies für das Fahrzeug 1, daß durch Beschleunigen des Fahrzeuges 1 eine Verringerung des Abstandes 12 herbeigeführt werden kann, um sich an die üblicherweise auf der Überholspur 5 höhere Fließgeschwindigkeit des überholenden Verkehrs anzupassen. Der minimale Abstand 13 zwischen dem ersten Fahrzeug 1 und dem direkt vorausfahrenden Fahrzeug 2 bestimmt sich hierbei beispielsweise nach den gesetzlich vorgeschriebenen Mindestabstand. Während eines Beschleunigungsvorganges, vorausgesetzt die Überholspur 5 der Straße 14 ist frei, wird der Fahrer des ersten Fahrzeuges 1 mit sich erhöhender Geschwindigkeit 8 des Fahrzeuges 1 eine Lenkbewegung in Richtung auf die Überholspur 5 vornehmen, so daß er im Endeffekt von der rechten Fahrspur 4 auf die Überholspur 5 ausschert. Während dieses Ausschervorganges, der zeitgleich mit dem Beschleunigungsvorgang zur Verringerung des Abstandes 12 höchstens auf den minimalen Abstand 13 parallel verläuft, wird ständig mit Hilfe der Erfassungseinrichtung 15 überprüft, ob sich der Abstand 12 schon auf den minimalen Abstand 13 verringert hat. Mindestens kurz vor oder bei Erreichen des minimalen Abstandes 13 durch den Abstand 12 wird in Form eines Abbruchkriteriums geprüft, ob ein Überholvorgang, wie er von dem Fahrer des Fahrzeuges 1 durch Beschleunigen undloder Lenken des Fahrzeuges 1 auf die Überholspur 5 eingeleitet wurde, ohne eine Kollision mit dem direkt vorausfahrenden Fahrzeug 2 durchgeführt werden kann.

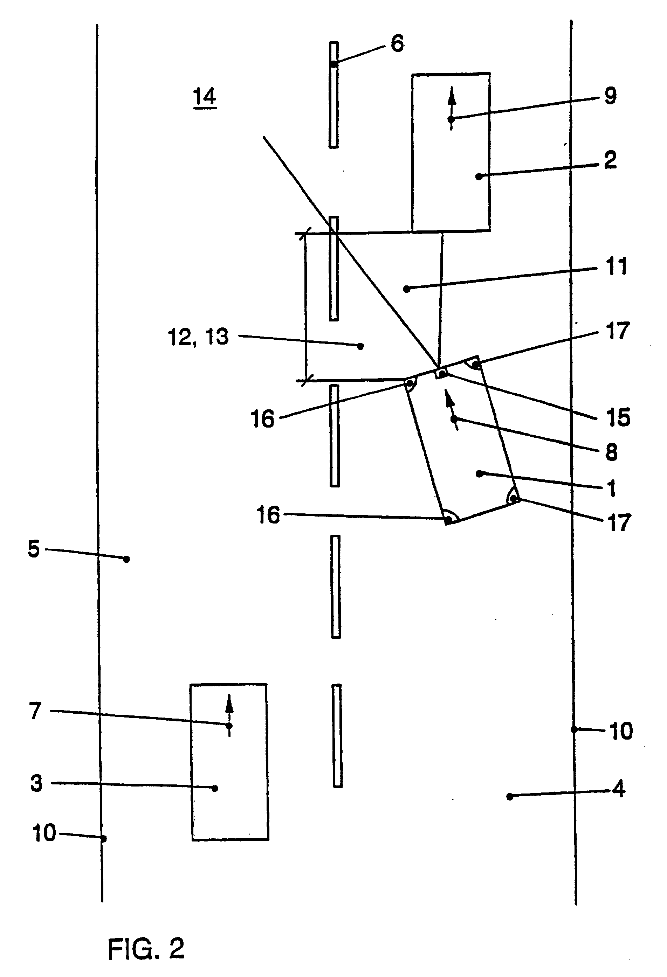

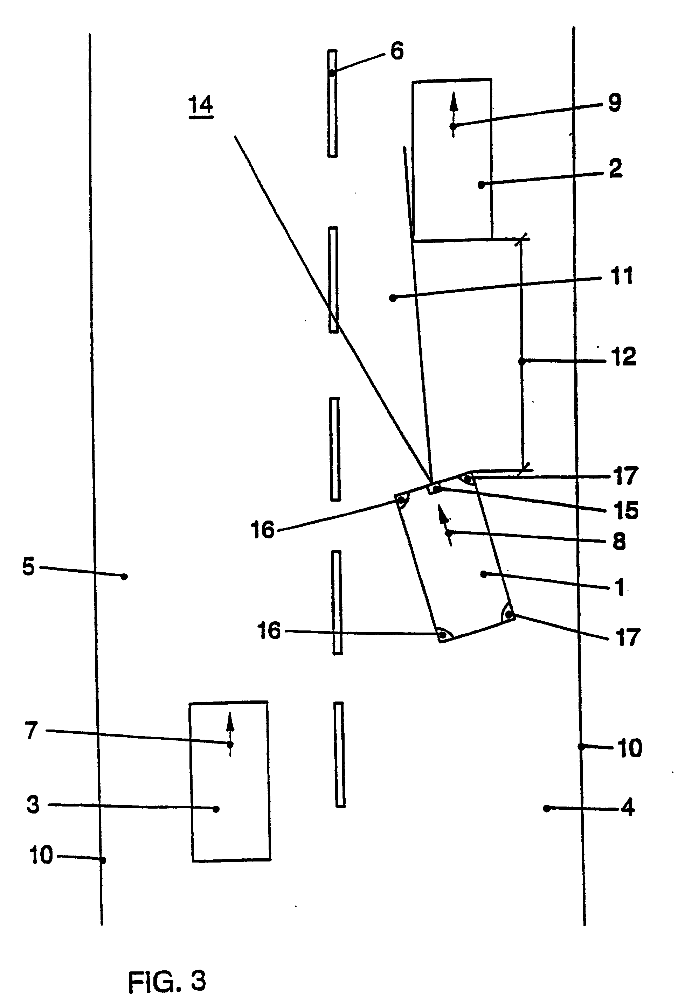

Eine derartige Situation für die Kollisionsprüfung ist beispielsweise in der Figur 2 und in der Figur 3 dargestellt.

In der Figur 2 hat das erste Fahrzeug 1 in der dargestellten Fahrsituation auf einen Abstand 12 bzw. 13 zu dem direkt vorausfahrenden Fahrzeug 2 aufgeschlossen, der ein überholen des direkt vorausfahrenden Fahrzeuges 2 ohne eine Kollision zwischen dem Fahrzeug 1 und dem Fahrzeug 2 nicht mehr ermöglichen würde. Dies wird bei dem vorgeschlagenen Verfahren dadurch erkannt, daß beispielsweise das direkt vorausfahrende Fahrzeug 2 noch innerhalb des Erfassungsbereiches 11 der Erfassungseinrichtung 15 liegt oder in diesem Erfassungsbereich 11 zumindestens teilweise enthalten ist. Zur Vermeidung der ansonsten bei Weiterführung des Überholvorganges unvermeidlichen oder zumindestens sehr wahrscheinlichen Kollision des ersten Fahrzeuges 1 mit dem direkt vorausfahrenden Fahrzeug 2 wird nach dem vorgeschlagenen Verfahren der Überholvorgang automatisch dadurch abgebrochen, daß die Beschleunigung des ersten Fahrzeuges 1 zurückgeführt wird oder/und ein ausdrückliches Bremsen des Fahrzeuges 1 vorgenommen wird. Dies kann beispielsweise auch automatisch und direkt nach Erkennung der möglichen Kollisionssituation ohne zusätzlichen Eingriff des Fahrers des erstens Fahrzueges 1 erfolgen. Darüber hinaus wird der Fahrer bei einer derartigen Vergrößerung des Abstandes 12 zu dem vorausfahrenden Fahrzeug 2 eine Rückstellung der Lenkbewegung machen, um wieder geradeaus in Richtung der rechten Fahrspur 4 der Straße 14 fahren zu können. Gleichzeitig kann beispielsweise die linke Fahrtrichtungsanzeige 16 automatisch zurückgestellt werden, um dem nachfolgenden Verkehr auf der Überholspur 5, also beispielsweise dem dritten Fahrzeug 3, von dem Abbruch des Überholmanövers Kenntnis zu geben und dadurch den Verkehr auf dieser Überholspur 5 nicht weiter zu stören.

In der Figur 3 ist eine der Figur 2 entsprechende Fahrsituation dargestellt, bei der das Überholmanöver des ersten Fahrzeuges 1 ohne Kollision mit dem direkt vorausfahrenden Fahrzeug 2 durchgeführt werden kann, da sich beispielsweise das direkt vorausfahrende Fahrzeug 2 nicht in dem Erfassungsbereich 11 der Erfassungseinrichtung 15 befindet. Der Fahrer des Fahrzeuges 1 hat aufgrund seiner Lenkbewegungen und aufgrund des Abstandes 12 zu dem direkt vorausfahrenden Fahrzeug 2 eine Fahrsituation geschaffen, bei der er, gleichbleibende Geschwindigkeits- bzw. Beschleunigungsverhältnisse zwischen den beiden Fahrzeugen 1 und 2 vorausgesetzt, ohne eine Kollision an dem direkt vorausfahrenden Fahrzeug vorbei auf die Überholspur 5 wechseln und dadurch den Überholvorgang weiterführen kann. In dieser Situation kann die Abstands- bzw. Geschwindigkeitsregelung gemäß dem vorgeschlagenen Verfahren ausgesetzt werden, da nunmehr die Weiterführung des Überholmanövers allein in die Zuständigkeit des Fahrers des ersten Fahrzeuges 1 fallen kann.

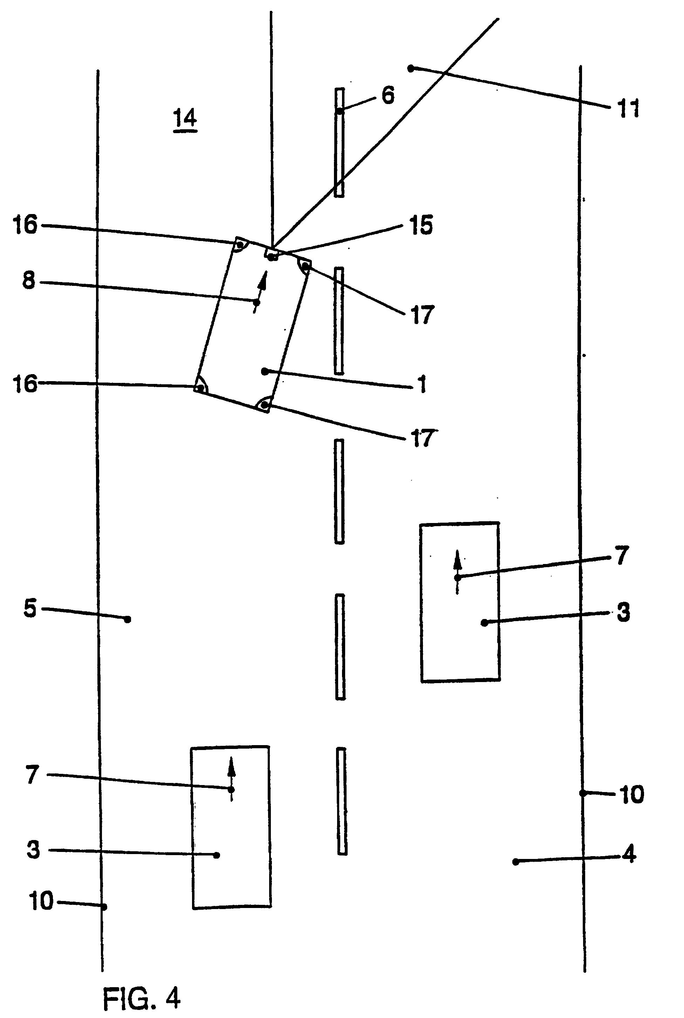

In der Figur 4 ist eine Fahrsituation dargestellt, bei der ein erstes Fahrzeug 1 nach Durchführung eines Überholmanövers vor einem weiteren Fahrzeug 3 wieder einscheren will, wobei das erste Fahrzeug 1 weiterhin eine Abstands- bzw. Geschwindigkeitsregelung vornehmen kann, um auf der rechten Fahrspur 4 der Straße 14 befindliche, hier nicht weiter dargestellte Fahrzeuge zu erkennen und damit zur Einstellung eines ausreichenden Abstandes zu diesen Fahrzeugen beiträgt. Eine derartige Auslösung der Abstands- bzw. Geschwindigkeitsregelung kann beispielsweise beim Wiedereinscheren durch Betätigen des rechten Fahrtrichtungsanzeigers 17, die ein Wechseln von der Überholspur 5 auf die rechte Fahrspur 4 signalisieren sollen, ausgelöst werden. Ist während des eigentlichen Überholvorganges, also des Fahrens des Fahrzeuges 1 auf der Überholspur 5 beispielsweise die Abstands- bzw. Geschwindigkeitsregelung ausgeschaltet, so kann insbesondere bei dichtem Verkehr auf der rechten Fahrspur 4 hinsichtlich der Sicherheit des Wiedereinscherens von großer Bedeutung sein, daß der Abstand des ersten Fahrzeuges 1 von einem neuen, direkt vorausfahrenden Fahrzeug ausreichend bleibt, um den Sicherheitsanforderungen zu genügen.

### BEZUGSNUMMERNLISTE

- 1: erstes Fahrzeug
- 2: direkt vorausfahrendes Fahrzeug
- 3: drittes Fahrzeug
- 4: rechte Fahrspur
- 5: Überholspur/Gegenfahrspur
- 6: Mittelstreifen
- 7: Geschwindigkeit drittes Fahrzeug
- 8: Geschwindigkeit erstes Fahrzeug
- 9: Geschwindigkeit direkt vorausfahrendes Fahrzeug
- 10: Fahrbahnrand
- 11: Erfassungsbereich
- 12: Abstand
- 13: Minimaler Abstand
- 14: Straße
- 15: Erfassungseinrichtung
- 16: Fahrtrichtungsanzeiger an der Fahrerseite
- 17: Fahrtrichtungsanzeiger an der Beifahrerseite

## Patentansprüche

1. Verfahren zur Regelung von Geschwindigkeit und/oder Abstand eines ersten Fahrzeuges (1) zu mindestens einem vorausfahrenden Fahrzeug (2) im Zusammenhang mit einem Überholvorgang, bei dem ein an dem ersten Fahrzeug (1) vorgesehenes Erfassungssystem (15) laufend mindestens das direkt vorausfahrende Fahrzeug sowie zumindestens die Stellung der Fahrtrichtunganzeigen (16, 17) und die Gierrate und/oder die Lenkstellung des ersten Fahrzeuges (1) erfaßt und eine Auswerteeinheit aus diesen Daten laufend Sollwerte zur Regelung der Geschwindigkeit des ersten Fahrzeuges (1) und seines Abstandes mindestens zu dem direkt vorausfahrenden Fahrzeug (2) ermittelt,
**dadurch gekennzeichnet, daß**
- nach Betätigen der einen Überholvorgang anzeigenden Fahrtrichtungsanzeige (16) durch den Fahrer des ersten Fahrzeuges (1) zur Vorbereitung des Überholvorganges der Abstand (12) zu dem direkt vorausfahrenden Fahrzeug (2) höchstens so lange verringert wird, bis sich ein minimal zulässiger Abstand (13) zu dem direkt vorausfahrenden Fahrzeug (2) einstellt,
- die Auswerteeinrichtung zumindest bei Erreichen des minimal zulässigen Abstandes (13) prüft, ob in der vorliegenden Fahrsituation eine Kollision mit dem vorausfahrendem Fahrzeug (2) eintreten wird, und
- bei Feststellen einer Kollisionsgefahr mit dem direkt vorausfahrenden Fahrzeug (2) der eingeleitete Überholvorgang dadurch abgebrochen wird, daß die Beschleunigung des ersten Fahrzeuges (1) verringert und/oder das erste Fahrzeug (1) abgebremst wird.

2. Verfahren nach Anspruch 1, **dadurch gekennzeichnet, daß** die Auswerteeinrichtung eine Kollisionsgefahr dann feststellt, wenn zumindest nach Erreichen des minimal zulässigen Abstandes (13) und Ablauf einer definierten Zeit das direkt vorausfahrende Fahrzeug (2) noch von der Erfassungseinrichtung (15) erfaßt wird.

3. Verfahren nach einem der Ansprüche 1 oder 2, **dadurch gekennzeichnet, daß** die Auswerteeinrichtung eine Kollisionsgefahr dann feststellt, wenn die Lenkbewegungen des Fahrers des ersten Fahrzeuges (1) für ein Vermeiden der Kollision des ersten Fahrzeuges (1) mit dem direkt vorausfahrenden Fahrzeug (2) nicht ausreichen.

4. Verfahren nach einem der Ansprüche 1 bis 3, **dadurch gekennzeichnet, daß** das Verringern der Beschleunigung und/oder das Bremsen des ersten Fahrzeuges (1) bei Erkennen einer Kollisionsgefahr mit dem vorausfahrenden Fahrzeug (2) bis zum Erreichen eines vorgegebenen Sicherheitsabstandes (12) automatisch erfolgt.

5. Verfahren nach einem der Ansprüche 1 bis 4, **dadurch gekennzeichnet, daß** bei Abbruch des Überholvorganges die linke Fahrtrichtungsanzeige (16) automatisch zurückgesetzt wird.

6. Verfahren nach einem der vorstehenden Ansprüche, **dadurch gekennzeichnet, daß** das erste Fahrzeug (1) bis zum Erreichen des minimalen Abstandes (13) zu dem direkt vorausfahrenden Fahrzeug (2) auf eine derartige Geschwindigkeit beschleunigt wird, daß es sich im wesentlichen der Fließgeschwindigkeit des Verkehrs auf der Überholspur (5) anpaßt, diese jedoch in keinem Fall überschreitet.

7. Verfahren nach Anspruch 6, **dadurch gekennzeichnet, daß** die Beschleunigung des ersten Fahrzeuges (1) nach dem Setzen des einen Überholvorgang angebenden Fahrtrichtungsanzeigers (16) durch den Fahrer längstens bis zum Erreichen des minimalen Abstandes (13) automatisch erfolgt.

8. Verfahren nach einem der vorstehenden Ansprüche, **dadurch gekennzeichnet, daß** der minimale Abstand (13) zwischen dem ersten Fahrzeug (1) und dem direkt vorausfahrenden Fahrzeug (2) den Mindestabstand nicht unterschreitet.

9. Verfahren nach einem der vorstehenden Ansprüche, **dadurch gekennzeichnet, daß** das erste Fahrzeug (1) durch Lenkbewegungen des Fahrers auf die Überholspur (5) ausschert und zumindest mit der erreichten Überholgeschwindigkeit, die maximal einen vom Fahrer gesetzten Geschwindigkeitswert annehmen kann, an dem bislang vorausfahrenden Fahrzeug (2) vorbeiführt wird.

10. Verfahren nach einem der vorstehenden Ansprüche, **dadurch gekennzeichnet, daß** nach erfolgtem Überholvorgang durch Betätigen der zweiten Fahrtrichtungsanzeige (17) und/oder Vorliegen einer Lenkbewegung zurück auf die der Fahrerseite des Fahrzeuges abgewandten Fahrspur (4) die Abstandsregelung wieder aufgenommen und die Fahrspur (4) auf ein neues vorausfahrendes Fahrzeug (2) untersucht wird.

11. Verfahren nach einem der vorstehenden Ansprüche, **dadurch gekennzeichnet, daß** beim Wiedereinscheren nach erfolgtem Überholvorgang die Betätigung der zweiten Fahrtrichtungsanzeige (17) für die Geschwindigkeits- und/oder Abstandsregelung nicht berücksichtigt wird.

12. Verfahren nach einem der vorstehenden Ansprüche, **dadurch gekennzeichnet, daß** die Abstandsregelung nach erfolgtem Überholvorgang wieder aufgenommen wird, wenn die Erfassungseinrichtung (15) wieder ein neues vorausfahrendes Fahrzeug (2) erfaßt.

13. Verfahren nach einem der vorstehenden Ansprüche, **dadurch gekennzeichnet, daß** der Zustand der einen Überholvorgang angebenden Fahrtrichtungsanzeige (16) beim Einleiten eines Überholvorganges erst ab Erreichen oder Überschreiten eines Geschwindigkeitsschwellwertes berücksichtigt wird.

14. Verfahren nach Anspruch 13, **dadurch gekennzeichnet, daß** als Geschwindigkeitsschwellwert eine Geschwindigkeit von etwa 70 bis 80 km/h vorgegeben wird.

15. Verfahren nach einem der Ansprüche 13 oder 14, **dadurch gekennzeichnet, daß** unterhalb des Geschwindigkeitsschwellwertes das Betätigen der rechten (17) und/oder der linken Fahrtrichtungsanzeige (16) als Einleitung eines Abbiegevorganges angesehen wird und Geschwindigkeit und/oder Abstand nicht geregelt werden.

16. Verfahren nach einem der Ansprüche 13 bis 15, **dadurch gekennzeichnet, daß** bei Betätigen der rechten (17) und/oder der linken Fahrtrichtungsanzeige (16) unterhalb des Geschwindigkeitsschwellwertes eine Geschwindigkeitsregelung und/oder eine Abstandsregelung mit von einem Überholvorgang unterschiedlicher Regelungscharakteristik vorgenommen wird.

## Claims

1. Method for controlling the speed and/or distance of a first vehicle (1) with respect to at least one vehicle (2) in front as part of an overtaking manoeuvre, in which a recording system (15) which is provided on the first vehicle (1) continuously records at least the vehicle directly in front and at least the position of the direction indicators (16, 17) and the yaw rate and/or the steering position of the first vehicle (1), and an evaluation unit continuously determines from this data set values for controlling the speed of the first vehicle (1) and its distance at least from the vehicle (2) directly in front,
**characterized in that**
- after the direction indictor (16) indicating an overtaking manoeuvre has been actuated by the driver of the first vehicle (1), in order to prepare for the overtaking manoeuvre the distance (12) from the vehicle (2) directly in front is reduced at most until a minimum permissible distance (13) from the vehicle (2) directly in front is established,
- the evaluation device, at least when the minimum permissible distance (13) is reached, checks whether in the current driving situation a collision with the vehicle (2) in front will occur, and
- if it is established that there is a risk of a collision with the vehicle (2) directly in front, the overtaking manoeuvre which has been initiated is interrupted as a result of the acceleration of the first vehicle (1) being reduced and/or the first vehicle (1) being braked.

2. Method according to Claim 1, **characterized in that** the evaluation device determines that there is a risk of a collision if the vehicle (2) directly in front is still recorded by the recording device (15) at least after the minimum permissible distance (13) has been reached and a defined time has elapsed.

3. Method according to one of Claims 1 or 2, **characterized in that** the evaluation device determines that there is a risk of a collision if the steering movements of the driver of the first vehicle (1) are insufficient to avoid a collision between the first vehicle (1) and the vehicle (2) directly in front.

4. Method according to one of Claims 1 to 3, **characterized in that** the reduction in the acceleration and/or the braking of the first vehicle (1) take(s) place automatically when it is detected that there is a risk of a collision with the vehicle (2) in front, until a predetermined safety distance (12) is reached.

5. Method according to one of Claims 1 to 4, **characterized in that** when the overtaking manoeuvre is interrupted, the left direction indicator (16) is automatically reset.

6. Method according to one of the preceding claims, **characterized in that** the first vehicle (1), by the time it has reached the minimum distance (13) from the vehicle (2) directly in front, is accelerated to a speed which is such that it substantially matches the speed at which the traffic is flowing on the overtaking lane (5) but does not in any event exceed this speed.

7. Method according to Claim 6, **characterized in that** the acceleration of the first vehicle (1) takes place automatically after the direction indicator (16) indicating an overtaking manoeuvre has been actuated by the driver and at most until the minimum distance (13) is reached.

8. Method according to one of the preceding claims, **characterized in that** the minimum distance (13) between the first vehicle (1) and the vehicle (2) directly in front does not fall below the minimum distance.

9. Method according to one of the preceding claims, **characterized in that** the first vehicle (1) pulls out onto the overtaking lane (5) as a result of steering movements carried out by the driver and is guided past the vehicle (2) which has hitherto been in front at least at the overtaking speed which has been reached, which can at most reach a speed level which has been set by the driver.

10. Method according to one of the preceding claims, **characterized in that** after the overtaking manoeuvre has taken place, the distance control is resumed again as a result of actuation of the second direction indicator (17) and/or the presence of a steering movement back onto the nearside lane (4), and the lane (4) is checked for a new vehicle (2) in front.

11. Method according to one of the preceding claims, **characterized in that** while the vehicle is pulling back in after an overtaking manoeuvre has been performed, the actuation of the second direction indicator (17) is not taken into account for the speed and/or distance control.

12. Method according to one of the preceding claims, **characterized in that** the distance control is resumed again after the overtaking manoeuvre has taken place when the recording device (15) once again records a new vehicle (2) in front.

13. Method according to one of the preceding claims, **characterized in that** the state of the direction indicator (16) which indicates an overtaking manoeuvre, during initiation of an overtaking manoeuvre, is only taken into account once a threshold speed has been reached or exceeded.

14. Method according to Claim 13, **characterized in that** the threshold speed which is preset is a speed of approximately 70 to 80 km/h.

15. Method according to one of Claims 13 or 14, **characterized in that** below the threshold speed the actuation of the right direction indicator (17) and/or of the left direction indicator (16) is regarded as the initiation of a turning manoeuvre and the speed and/or distance are/is not controlled.

16. Method according to one of Claims 13 to 15, **characterized in that** when the right direction indicator (17) and/or the left direction indicator (16) are/is actuated at below the threshold speed, a speed control and/or distance control are/is carried out using a control characteristic which is different from an overtaking manoeuvre.

## Revendications

1. Procédé pour la régulation de la vitesse et/ou de la distance d'un premier véhicule (1) par rapport à au moins un véhicule qui le précède (2) en relation avec une manoeuvre de dépassement, avec lequel un système de détection (15) prévu sur le premier véhicule (1) détecte continuellement au moins le véhicule qui le précède directement et au moins la position des indicateurs de changement de direction (16, 17) et le taux de lacet et/ou la position de la direction du premier véhicule (1) et une unité d'analyse détermine continuellement sur la base de ces données des valeurs de consigne pour la régulation de la vitesse du premier véhicule (1) et sa distance au moins par rapport au véhicule qui le précède directement (2),
**caractérisé en ce que**
- après l'actionnement par le conducteur du premier véhicule (1) d'un indicateur de changement de direction (16) qui indique une manoeuvre de dépassement en vue de préparer la manoeuvre de dépassement, la distance (12) par rapport au véhicule qui le précède directement (2) est réduite au maximum jusqu'à atteindre une distance minimale admissible (13) par rapport au véhicule qui le précède directement (2),
- l'unité d'analyse vérifie, au moins après avoir atteint la distance minimale admissible (13), si une collision avec le véhicule qui précède (2) sera provoquée dans la situation de conduite actuelle, et
- en cas de constatation d'un risque de collision avec le véhicule qui précède directement (2), la manoeuvre de dépassement amorcée est interrompue **en ce que** l'accélération du premier véhicule (1) est réduite et/ou le premier véhicule (1) est freiné.

2. Procédé selon la revendication 1, **caractérisé en ce que** l'unité d'analyse constate un risque de collision lorsque le véhicule qui précède directement (2) est encore détecté par le dispositif de détection (15) au moins après avoir atteint la distance minimale admissible (13) et après écoulement d'un temps défini.

3. Procédé selon l'une des revendications 1 ou 2, **caractérisé en ce que** l'unité d'analyse constate un risque de collision lorsque les mouvements de direction du conducteur du premier véhicule (1) ne suffisent pas pour éviter la collision du premier véhicule (1) avec le véhicule qui le précède directement (2).

4. Procédé selon l'une des revendications 1 à 3, **caractérisé en ce que** la réduction de l'accélération et/ou le freinage du premier véhicule (1) en cas de détection d'un risque de collision avec le véhicule qui le précède (2) se déroule automatiquement jusqu'à atteindre une distance de sécurité prédéfinie (12).

5. Procédé selon l'une des revendications 1 à 4, **caractérisé en ce que** l'indicateur de changement de direction de gauche (16) est automatiquement désactivé lors de l'interruption de la manoeuvre de dépassement.

6. Procédé selon l'une des revendications précédentes, **caractérisé en ce que** le premier véhicule (1) est accéléré à une vitesse donnée jusqu'à atteindre la distance minimale (13) par rapport au véhicule qui le précède directement (2) de manière à ce qu'il s'adapte pour l'essentiel à la vitesse de circulation du trafic sur la bande de dépassement (5) sans toute fois jamais dépasser celle-ci.

7. Procédé selon la revendication 6, **caractérisé en ce que** l'accélération du premier véhicule (1) après l'activation par le conducteur de l'indicateur de changement de direction (16) qui indique une manoeuvre de dépassement s'effectue automatiquement au maximum jusqu'à atteindre la distance minimale (13).

8. Procédé selon l'une des revendications précédentes, **caractérisé en ce que** la distance minimale (13) entre le premier véhicule (1) et le véhicule qui le précède directement (2) n'est pas inférieure à la distance minimale.

9. Procédé selon l'une des revendications précédentes, **caractérisé en ce que** le premier véhicule (1) déboîte sur la bande de dépassement (5) suite aux mouvements de direction du conducteur et est amené à dépasser le véhicule (2) qui le précédait auparavant au moins à la vitesse de dépassement atteinte, laquelle peut prendre au maximum une valeur de vitesse définie par le conducteur.

10. Procédé selon l'une des revendications précédentes, **caractérisé en ce que** la régulation de la distance est de nouveau engagée lorsque la manoeuvre de dépassement est achevée en actionnant le deuxième indicateur de changement de direction (17) et/ou en présence d'un mouvement de direction destiné à retourner sur la bande de circulation (4) à l'opposé du côté du conducteur du véhicule et la bande de circulation (4) est ensuite examinée en vue de la présence d'un nouveau véhicule qui précède (2).

11. Procédé selon l'une des revendications précédentes, **caractérisé en ce que** l'actionnement du deuxième indicateur de changement de direction (17) n'est pas pris en compte pour la régulation de la vitesse et/ou de la distance lors du rabattement après la fin de la manoeuvre de dépassement.

12. Procédé selon l'une des revendications précédentes, **caractérisé en ce que** la régulation de la distance après la fin de la manoeuvre de dépassement est de nouveau engagée lorsque le dispositif de détection (15) détecte de nouveau un nouveau véhicule qui précède (2).

13. Procédé selon l'une des revendications précédentes, **caractérisé en ce que** l'état de l'indicateur de changement de direction (16) qui indique une manoeuvre de dépassement n'est pris en compte lors de l'amorce d'une manoeuvre de dépassement qu'après avoir atteint ou dépassé une valeur de seuil de la vitesse.

14. Procédé selon la revendication 13,
**caractérisé en ce qu'**une vitesse d'environ 70 à 80 km/h est prédéfinie comme valeur de seuil de la vitesse.

15. Procédé selon l'une des revendications 13 ou 14, **caractérisé en ce qu'**au-dessous de la valeur de seuil de la vitesse, l'actionnement de l'indicateur de changement de direction de droite (17) et/ou de gauche (16) est considéré comme l'amorce d'une manoeuvre de changement de direction et la vitesse et/ou la distance ne sont pas régulées.

16. Procédé selon l'une des revendications 13 à 15, **caractérisé en ce que** lorsque l'indicateur de changement de direction de droite (17) et/ou de gauche (16) est actionné au-dessous de la valeur de seuil de la vitesse, une régulation de la vitesse et/ou une régulation de la distance est effectuée avec une caractéristique de régulation différente de celle d'une manoeuvre de dépassement.
